# EUROPÄISCHE PATENTSCHRIFT

(11) **EP 1 700 046 B1**
(45) Veröffentlichungstag und Bekanntmachung des Hinweises auf die Patenterteilung: **30.03.2011**
(21) Anmeldenummer: 04802992.0
(22) Anmeldetag: 22.12.2004
(51) Int. Cl.: F16C 11/06

(54) **KUGELGELENK**
BALL JOINT
ARTICULATION A ROTULE

(30) Priorität: 23.12.2003 DE 20320238 U; 21.12.2004 DE 20401973 U
(43) Veröffentlichungstag der Anmeldung: 13.09.2006
(73) Patentinhaber: HQM Sachsenring GmbH, 08058 Zwickau (DE)
(72) Erfinder: STRAUCH, Jürgen, 08115 Lichtentanne (DE); WACKES, Ulrich, 08115 Lichtentanne (DE)
(74) Vertreter: Rumrich, Gabriele
(86) Internationale Anmeldenummer: PCT/DE2004/002812
(87) Internationale Veröffentlichungsnummer: WO 2005/061911

(56) Entgegenhaltungen:
- EP-A- 0 411 777
- EP-A- 1 217 233
- WO-A-03/058080
- US-A- 4 797 019
- US-A- 5 641 235
- US-A- 5 947 627

## Beschreibung

Die Erfindung betrifft ein Kugelgelenk mit einer Kugel, die in einem Kugelgelenkgehäuse beweglich gelagert ist. Ein gattungsgemäßes Kugelgelenk ist aus DE 298 17 850 U1 bekannt. Darin wird ein Kugelgelenk mit einem Kugelgelenkgehäuse welches ein Befestigungsteil aufweist beschrieben, wobei das Kugelgelenkgehäuse aus einem zylindrischen Gehäuseteil besteht, welches von Kunststoff ummantelt ist, wobei der Kunststoff die Kugel umgibt und die Lagerung der Kugel bildet. Die eigentliche Lagerung der Kugel erfolgt durch eine Gleitschale, welche durch den Kunststoff des Kugelgelenkgehäuses ummantelt ist. Der Kunststoff, welcher hier das Kugelgelenkgehäuse bildet, kann aus glas- oder kohlefaserverstärktem beziehungsweise aus kugelverstärktem Material bestehen. Das Gehäuseteil und das Befestigungsteil bilden eine bauliche Einheit, wobei das Befestigungsteil nicht von dem Kunststoff, welcher das Kugelgelenkgehäuse bildet, ummantelt ist. Nachteilig hierbei ist, dass der Kunststoff, welcher die Gleitschale bildet und der Kunststoff, welcher das Kugelgelenkgehäuse bildet, aus unterschiedlichen Werkstoffen bestehen. Insbesondere das Schwindverhalten des Kunststoffs des Kugelgelenkgehäuses wirkt sich dabei negativ aus. Weiterhin ist nachteilig, dass die Verbindungsposition zwischen Befestigungsteil und Gehäuseteil bei einer Schweißverbindung nicht geschützt und somit besonders korrosionsgefährdet ist. GB 1 121 004 beschreibt ein Kugelgelenk welches einen Kugelzapfen mit einer Kugel aufweist. Die Kugel wird in einem zylindrischen Gehäuse positioniert, welches an einem Befestigungselement ausgebildet ist und der Zwischenraum zwischen Kugel und Gehäuse mit Kunststoff ausgespritzt und das Gehäuse zumindest teilweise umspritzt. Durch die Verwendung des zylindrischen Gehäuses, wobei zwischen Gehäuse und Kugel lediglich Kunststoff vorgesehen ist, sind die Axialkräfte begrenzt. Weiterhin ist zwischen Gehäuse und Kunststoff keinerlei Verdrehsicherung vorgesehen, wodurch die Gefahr gegeben ist, dass sich die das Gehäuse und der Kunststoff zueinander verdrehen.

Die Konstruktiven Gestaltungsvarianten sind den entsprechenden Einsatzfällen nicht einfach anpassbar.

In DE 196 38 252 A1 wird ein Kugelgelenk und ein Verfahren zu dessen Herstellung beschrieben, bei welchem das Kugelgelenkgehäuse aus einem Rohrabschnitt mit eingegossenem oder eingespritztem Gehäusematerial besteht. Die Kugel eines Kugelzapfens wird in dem Gehäusematerial schwenkbar gelagert. Nachteilig ist die ungenügende Sicherheit gegen axiale Beanspruchung des Kugelzapfens. Weiterhin ist keine Aufnahmemöglichkeit für einen Dichtungsbalg vorgesehen, so dass nur eine ungenügende Abdichtung erfolgen kann.

Aus US 5,947,627 A ist eine Koppelstange bekannt, bei welcher an jedem Ende ein Kugelgelenk ausgebildet ist. Die Kugel des Kugelzapfens sitzt in einem zylindrische Gehäuse, wobei der Abstand zwischen Kugel und Innendurchmesser des Gehäuses mit Kunststoff ausgespritzt ist und das Gehäuse mit diesem Kunststoff umspritzt ist. Eine ähnliche Lösung ist aus US 5,641,235 A bekannt, jedoch sitzt hier die Kugel des Kugelzapfens zusätzlich in einer Gleitschale.

Nachteilig ist die ungenügende Ausreißfestigkeit bei einer Axialbelastung des Kugelzapfens.

Aufgabe der Erfindung ist es, ein Kugelgelenk zu entwickeln, welches einen äußerst einfachen Aufbau aufweist, verdrehsicher und einfach herstellbar ist und eine vielseitige Anwendbarkeit bei hoher Zuverlässigkeit gewährleistet sowie einer hohen Axialbelastung standhält.

Diese Aufgabe wird erfindungsgemäß mit den Merkmalen des ersten Patentanspruchs gelöst. Vorteilhafte Ausführungen ergeben sich aus den Unteransprüchen.

Das Kugelgelenk weist eine Kugel auf, die mit ihrer Kugelfläche in einem Kugelgelenkgehäuse beweglich gelagert ist und besitzt eine Dichtungsbalgaufnahme, wobei das Kugelgelenkgehäuse ein von der Kugel beabstandetes Gehäuseteil aufweist, und sich mindestens ein Kugelzapfen oder mindestens eine Hülse die Kugel anschließt, wobei der Zwischenraum zwischen der Kugel und dem Gehäuseteil mit Kunststoff gefüllt und das Gehäuseteil zumindest teilweise von Kunststoff umschlossen ist.

Erfindungsgemäß ist die Dichtungsbalgaufnahme in Form einer umfangsseitig eingebrachten Nut im Gehäuse ausgebildet und befindet sich
- entweder vollständig im Kunststoff oder
- ist zwischen einem radial nach außen abgewinkelten Bereich des Gehäuseteils und einer Stirnfläche des Kunststoffs angeordnet, wobei das Gehäuseteil aus Richtung der Dichtungsbalgaufnahme in Richtung zur Kugel (7.1)
- radial nach innen abgewinkelt dann entsprechend der Krümmung der Kugel (7.1) geformt und anschließend wieder radial nach außen abgewinkelt ist oder
- radial nach innen und anschließend radial nach außen abgewinkelt ist, wobei der in Richtung zur Kugel (7.1) liegende Innendurchmesser (d1) des Gehäuseteils (1) kleiner ist, als der Durchmesser (D7.1) der Kugel (7.1).

Durch eine derartige Form des metallisches Gehäuseteiles des Kugelgelenks (z.B. aus einem Rohrabschnitt) können die Ausreißkräfte erhöht werden, gegenüber einer z.B. zylindrischen Form des Gehäuseteils. Greifen nun axiale Zugkräfte am Zapfen oder der Hülse an, wirkt der in Richtung zur Kugel abgewinkelte Bereich des Gehäuseteils als Ausreißsicherung.

Dies wird verstärkt, wenn das Gehäuseteil, wie vorgenannt bereits beschrieben, ausgehend von der Dichtungsbalgaufnahme in Richtung zur Kugel radial nach innen abgewinkelt, dann entsprechend der Krümmung der Kugel geformt und anschließend wieder radial nach außen abgewinkelt ist.

Dabei ist es möglich, dass der entsprechend der Krümmung der Kugel geformte Bereich des Gehäuseteils an seinen beiden Enden, die beidseitig über den Äquatorbereich der Kugel ragen, einen Innendurchmesser aufweist, der gleich oder kleiner ist als der Durchmesser der Kugel. In diesem Fall muss das Gehäuseteil längs der Achse des Kugelgelenks geschlitzt sein, das es sonst nicht über der Kugel montierbar ist.

Das Kugelgelenk weist entweder einen Kugelzapfen (Kugel mit einem daran angeordneten Zapfen) oder in einer Ausnehmung der Kugel angeordnete Hülsen (Hülsengelenk) auf. Die Kugel ist mit ihrer Kugelfläche in dem Kugelgelenkgehäuse beweglich gelagert, wobei das Kugelgelenkgehäuse ein Gehäuseteil aufweist, an welchem bedarfsweise ein Befestigungsteil angeordnet ist. Erfindungsgemäß sind die Kugel des Kugelzapfens und das zylindrische Gehäuseteil von Kunststoff umschlossen derart, dass der Kunststoff sowohl die Gleitfläche für die Kugelfläche der Kugel als auch in Verbindung mit dem Gehäuseteil das Kugelgelenkgehäuse bildet. Es ist jedoch auch möglich, die Kugel des Kugelzapfens in einer Gleitschale schwenkbar zu lagern, wobei dann die Gleitschale von Kunststoff umschlossen ist. Vorteilhafter Weise ist auch die Verbindung zwischen zylindrischem Gehäuseteil und Befestigungsteil mit Kunststoff ummantelt. Weiterhin kann zwischen Gehäuseteil und Kugel bzw. Gleitschale ein im Kunststoff eingebettetes Sicherungselement angeordnet sein, welches eine größere Ausreißsicherheit gewährleistet. Die Form des Sicherungselementes ist dabei bevorzugt der Krümmung der Kugel angepasst. Der Kunststoff, in welchen das Sicherungselement eingebettet ist, entspricht bevorzugt dem Kunststoff, welcher die Kugel und das Gehäuseteil ummantelt. Alternativ ist es - möglich, dass der Kunststoff, in welchen das Sicherungselement eingebettet ist, ein zweiter Kunststoff ist.

Der Kunststoff, welcher die Kugel und das Gehäuseteil ummantelt, kann dabei vorzugsweise aus Polyoxymethylen (POM) bestehen, welcher bisher ausschließlich als Gleitschalenmaterial eingesetzt wurde. POM weist eine hervorragende Wärmebeständigkeit bis 100 Grad Celsius und eine sehr gute Kältebeständigkeit bis minus 60 Grad Celsius auf. Weiterhin besitzt POM gute Gleiteigenschaften, wodurch, in Verbindung mit guten Festigkeitseigenschaften neben einem hohen Elastizitätsmodul (Zug), POM ein idealer Werkstoff für ein Kugelgelenkgehäuse, in Verbindung mit einem darin eingebetteten, vorzugsweise metallischen zylindrischen Gehäuseteil, ist. Weiterhin können Kunststoffe verstärkt (z.B. Faserverstärkt mit Kohlefaser, Glasfaser usw.) oder modifiziert (PTFE. - Polytetrafluorethylen) zum Einsatz kommen, welche gute Gleiteigenschaften, Temperaturbeständigkeit im Bereich von - 40°C bis ≥90°C sowie eine geringe Schwindung aufweisen. Die Kugel (ggf. mit Gleitschale) kann durch das Umspritzen mit Kunststoff zentriert oder unzentriert im Gehäuseteil positioniert werden. Durch diese freie Positionierung im Raum ist eine 100%ige Einhaltung der vorgegebenen kinematischen Daten möglich. Der Kunststoff, weist vorteilhafter Weise keine Schmiernuten auf. Weiterhin ist das Kugelgelenk vollkommen fettfrei aufgebaut. Es ist jedoch möglich, die Kugel mit einem Gleitmittel zu beschichten. Dafür findet vorzugsweise eine Beschichtung aus einem wärme- und kältebeständigen, teilkristallinen und gute Gleiteigenschaften aufweisenden Kunststoff, wie z.B. PTFE (Polytetrafluorethylen) Anwendung. Wenn die Kugel an ihrer Polfläche eine fertigungstechnisch bedingte Zentrieröffnung aufweist, wird auch diese beim Injizieren des Kunststoffs mit diesem ausgefüllt. Bei der ersten Schwenkbewegung des Kugelzapfens wird der in der Zentrieröffnung befindliche Kunststoff abgerissen und verbleibt in der Zentrieröffnung. Weiterhin ist es möglich, das vorzugsweise aus Metall bestehende Gehäuseteil an seiner Innenkontur und oder an einer oder beiden Stirnflächen mit elastischen Dämpfungselementen zu versehen.

Bei Verwendung eines Befestigungsteils wird dieses meist am Gehäuseteil durch ein Schweißverbindung befestigt. Die Schweißnaht ist dabei besonders korrosionsgefährdet. Durch das Umspritzen der Verbindungsposition zwischen Befestigungsteil und Gehäuseteil wird der Kunststoff gleichzeitig als Korrosionsschutz im Bereich der Schweißnaht wirksam. Gleichzeitig wird dadurch, dass der Kunststoff auch teilweise das Befestigungsteil umhüllt, die Verdrehsicherheit des Kunststoffs gewährleistet. Es ist weiterhin möglich, dass gesamte Befestigungsteil mit Kunststoff zu umspritzen, wodurch man einen kompletten Korrosionsschutz des Kugelgelenks erhält. Ein nachgeschalteter Korrosionsschutzprozess kann somit entfallen.

Vorteilhafter Weise ist im Kunststoff ebenfalls in Richtung zum Kugelzapfen eine Aufnahme für einen Dichtungsbalg ausgebildet.

Das erfindungsgemäße Kugelgelenk ist sehr einfach herstellbar, insbesondere da durch die Einzelteile nur geringe Forderungen/Toleranzen hinsichtlich der Paarungsgenauigkeit zu erfüllen sind.

In der einfachsten Ausführung wird die unbeschichtete Kugel des Kugelzapfens in einem z.B. zylindrischen Gehäuseteil zentrisch positioniert und sowohl die Kugel als auch das Gehäuseteil, sowie die Verbindungsposition zum Befestigungsteil mit Kunststoff aus- bzw. umspritzt, wobei gleichzeitig eine Aufnahme für den Dichtungsbalg angeformt wird. Neben der zylindrischen Ausbildung des Gehäuseteils ist es auch möglich, dieses oval auszubilden. Weiterhin kann das Gehäuseteil im Querschnitt rechtwinklig zu seiner Längsachse als Vieleck (z.B. als Rechteck oder Quadrat) ausgebildet sein oder rechtwinklig zu seiner Längsachse einen zylindrischen Innendurchmesser und eine ovalen oder als Vieleck ausgebildete Außenkontur aufweisen oder umgekehrt. Die Wandstärke des Gehäuseteils kann gleich oder unterschiedlich über den Querschnitt verlaufen. Weiterhin kann das Gehäuseteil in Richtung zum Kugelzapfen eine sich verengende Kontur, insbesondere sich verengende Innenmaße aufweisen, wodurch sich die Ausreißkraft des Kugelzapfens erhöht. Das Gehäuseteil besteht bevorzugt aus metallischem Werkstoff, Faserverbundwerkstoff oder Keramik. Ein Gehäuseteil aus metallischem Werkstoff kann z.B. aus einem Rohrabschnitt oder aus einem Blechformteil gefertigt sein.

Die Erfindung wird nachfolgend anhand folgender Zeichnungen näher erläutert.

Es zeigen:
- Fig. 1:: Kugelgelenk mit zylindrischem metallischen Gehäuseteil 1 und angeschweißtem Befestigungsteil B,
- Fig. 1a:: Schnitt A-A gem. Fig. 1,
- Fig. 2:: Kugelgelenk (Längsschnitt), wobei das Gehäuseteil 1 an seiner Innenkontur 1i und an seiner Außenkontur 1a oval ausgebildet ist und die Kugel 7.1 in einer Gleitschale 9 schwenkbar gelagert ist, mit angedeutetem Dichtungsbalg 10,
- Fig. 2a:: Schnitt B-B gem. Fig. 2;
- Fig. 3:: Kugelgelenk (Längsschnitt), wobei das Gehäuseteil 1 an seiner Innenkontur 1i oval und an seiner Außenkontur 1a kreisförmig ausgebildet ist und die Kugel 7.1 in einer Gleitschale 9 schwenkbar gelagert ist,
- Fig. 3a:: Schnitt C-C gem. Fig. 3;
- Fig. 4:: Kugelgelenk (Längsschnitt), wobei das Gehäuseteil 1 an seiner Innenkontur 1i und an seiner Außenkontur 1a achteckig ausgebildet ist und die Kugel 7.1 in einer Gleitschale 9 schwenkbar gelagert ist,
- Fig. 4a:: Schnitt D-D gem. Fig. 4;
- Fig. 5:: Kugelgelenk (Längsschnitt), wobei das Gehäuseteil 1 an seiner Innenkontur 1i kreisförmig und an seiner Außenkontur 1a sechseckig ausgebildet ist und die Kugel 7.1 in einer Gleitschale 9 schwenkbar gelagert ist,
- Fig. 5a:: Schnitt E-E gem. Fig. 5;
- Fig. 6:: Längsschnitt durch ein Kugelgelenk mit Sicherungselement 11 zwischen Kugel 7.1 und Gehäuseteil 1,
- Fig. 6a:: Schnitt F-F gem. Fig. 6,
- Fig. 7:: Kugelgelenk mit einem Gehäuseteil 1 aus einem zylindrischen Rohrabschnitt, welches einen radial nach außen abgebogenen Bund 1.1 aufweist, der die Dichtungsbalgaufnahme 6 bildet und mit separat im Kunststoff 2 eingebettetem Befestigungsteil B (Stahl),
- Fig. 8:: Kugelgelenk mit einem Gehäuseteil 1 aus einem zylindrischen Rohrabschnitt, welches einen radial nach außen abgebogenen Bund 1.1 aufweist, der die Dichtungsbalgaufnahme 6 bildet, wobei das Gehäuseteil 1 in Richtung zur Kugel 7.1 radial nach innen und anschließend radial nach außen abgewinkelt ist, wobei der in Richtung zur Kugel 7.1 liegende Innendurchmesser d1 des Gehäuseteils 1 kleiner ist, als der Durchmesser D7.1 der Kugel 7.1. Das Befestigungsteil B ist nicht am Gehäuseteil 1 befestigt, sondern separat im Kunststoff 2 eingebettet.
- Fig. 9:: Vorrichtung zur Herstellung des Kugelgelenks gem. Fig. 1,
- Fig. 10:: Vorrichtung zur Herstellung des Kugelgelenks gem. Fig. 7,
- Fig. 11:: Kugelgelenk mit beidseitigem Kugelschaft 7.2,

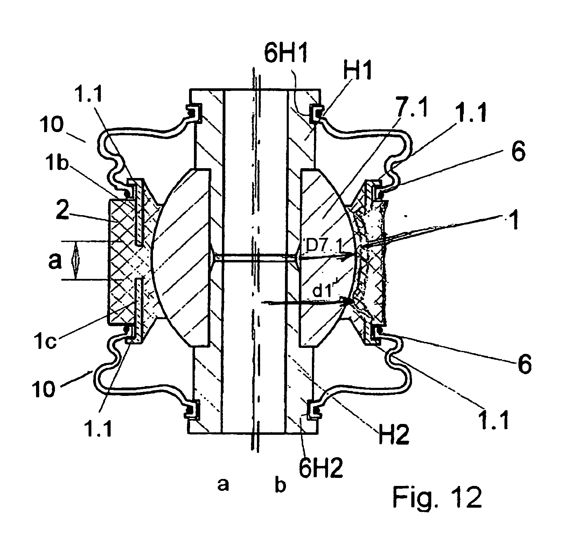

- Fig. 12:: Hülsengelenk, mit einem Gehäuseteil 1 aus einem zylindrischen Rohrabschnitt, welches an beiden Enden einen radial nach außen abgebogenen Bund 1.1 aufweist, der die Dichtungsbalgaufnahme 6 bildet, wobei auf der linken Seite a zwei und auf der rechten Seite b ein Gehäuseteil 1 verwendet wird und gemäß der rechten Seite b das Gehäuseteil 1 ausgehend von einer Dichtungsbalgaufnahme 6 in Richtung zur Kugel 7.1 radial nach innen angewinkelt, dann entsprechend der Krümmung der Kugel 7.1 geformt und anschließend wieder radial nach außen in Richtung zur anderen Dichtungsbalgaufnahme 6 abgewinkelt ist. Beidseitig zum Äquatorbereich der Kugel 7.1 ist damit das Gehäuseteil 1 auf einen Durchmesser d1, der kleiner ist als der Durchmesser D7.1 der Kugel 7.1 verjüngt. In diesem Fall muss das Gehäuseteil 1 längs der Achse A des Kugelgelenks geschlitzt sein, da es sonst nicht über der Kugel 7.1 montierbar ist.

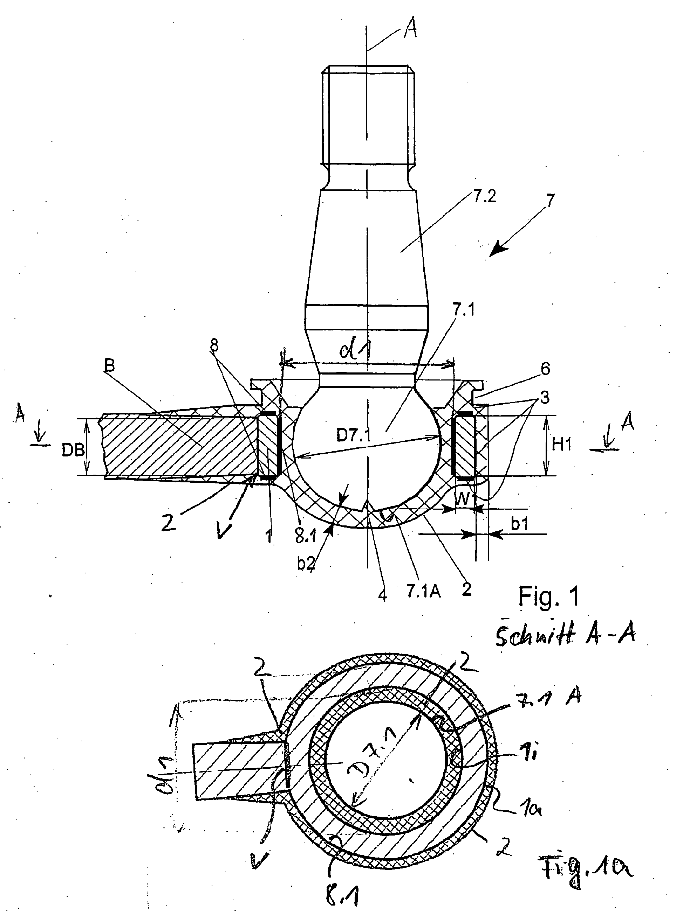

Das Kugelgelenk weist gemäß Figur 1 ein zylindrisches metallisches Gehäuseteil 1 auf, an welchem ein Befestigungsteil B vorzugsweise durch Schweißen befestigt ist. An den beiden Stirnseiten des Gehäuseteils 1 befinden sich axial dämpfende elastische Elemente 8 und an der Innenfläche des Gehäuseteils 1 ist ein radial dämpfendes elastisches Element 8.1 angeordnet. Zentrisch im hier zylindrischen Gehäuseteil 1 befindet sich die Kugel 7.1 des Kugelzapfens 7, welcher einen Zapfen 7.2 aufweist. Die Kugel 7.1 (Kugelfläche 7.1A) des Kugelzapfens 7, das Gehäuseteil 1 mit den dämpfenden elastischen Elementen 8 und 8.1 und die Verbindungsposition V zwischen Gehäuseteil 1 und Befestigungsteil B wurden mit Kunststoff 2 (z.B. POM - Polyoxymethylen) umspritzt, der anschließend aushärtet, wodurch eine spielfreie und zuverlässige Verbindung zwischen der Kugel 7.1 des Kugelzapfens 7 und dem Gehäuseteil 1 gebildet wird und die Kugel 7.1 des Kugelzapfens 7 schwenkbar im Kunststoff 2 eingebettet ist. Es sind dabei auch andere Kunststoffe z.B. Polyamid (PA), faserverstärkte Kunststoffe usw. einsetzbar. Dabei wurde gleichzeitig in Richtung zum Zapfen 7.2 des Kugelzapfens 7 die Dichtungsbalgaufnahme 6 im Kunststoff 2 in Form einer umlaufenden Nut ausgeformt. In die an der Polfläche der Kugel 7.1 befindliche Zentrieröffnung 4 fließender Kunststoff 2 wird beim ersten Betrieb, d.h. bei einer ersten Schwenkbewegung des Kugelzapfens 7 und somit der Kugel 7.1 abgerissen und verbleibt in der Zentrieröffnung 4. Beim Transport und der Montage behält der Kugelzapfen 7 durch den in der Zentrieröffnung 4 eingeflossenen Kunststoff seine Ausgangsposition bei, wodurch die Handhabung bei der Montage erleichtert wird, da der Kugelzapfen 7 nicht selbsttätig ausschwenken kann.

Zwischen dem Außendurchmesser der Kugel 7.1 und dem Innendurchmesser des Gehäuseteils 1 ist dabei bei einem Kugeldurchmesser D7.1 von 14 bis 25 mm ein Abstand a von vorzugsweise 1 bis 5mm vorhanden, welcher mit Kunststoff 2 ausgefüllt ist. Weiterhin weist die Wand 3 des Kunststoffs 2 im Bereich der Außenkontur des Gehäuseteils 1 eine Mindestwandstärke b1 (vorzugsweise 0.5 bis 2mm) und im Bereich der vom Zapfen 7 abgewandten Seite der Kugel 7.1 eine Mindestwandstärke b2 (vorzugsweise 3 bis 6mm) auf. Der Durchmesser DB des Befestigungsteils B an der Befestigungsposition V beträgt bevorzugt 6 bis 10 mm und das Gehäuseteil 1 weist eine Wandstärke W1 von vorzugsweise 1 bis 8 mm bei einer Höhe H1 von 5 bis 8 mm auf. Selbstverständlich können die Abmessungen des Kugelgelenks entsprechend der erforderlichen Baugröße verändert werden.

Den Schnitt A-A gem. Fig. 1 zeigt Fig. 1 a. Es ist hier erkennbar, dass der Durchmesser D7.1 der Kugel 7 kleiner ist, als der Innendurchmesser d1 des zylindrischen Gehäuseteils 1 und zwischen Innenkontur 1i des Gehäuseteils 1 und Kugelfläche 7.1 A der Kugel 7.1 Kunststoff 2 vorhanden ist. Die Außenkontur 1 a des Gehäuseteils 1 ist ebenfalls mit Kunststoff 2 ummantelt. Die Befestigungsposition V zwischen Gehäuseteil 1 und Befestigungsteil B ist ebenfalls mit Kunststoff 2 umhüllt, wodurch die Verdrehsicherheit zwischen Kunststoff 2 und Gehäuseteil 1 gewährleistet ist.

Neben dem dargestellten Beispiel ist es auch möglich, die Kugel im Bezug auf das Gehäuseteilteil 1 in Richtung zur Dichtungsbalgaufnahme 6 bzw. dazu entgegengesetzt oder auch unzentriert im Gehäuseteil 1 anzuordnen (nicht dargestellt).

Durch ein allseitiges Umspritzen des Gehäuseteils 1 und der Schweißnaht (Befestigungsposition V) zwischen Gehäuseteil 1 und Befestigungsteil B oder der Gesamtheit von Gehäuseteil 1 und Befestigungsteil B wird ein zuverlässiger Korrosionsschutz gewährleistet. Weiterhin wird durch das Umhüllen des Gehäuseteils 1 mit Kunststoff 2 die Schrumpfung des Kunststoffes auf die Kugel minimiert.

Insgesamt wird mit der erfindungsgemäßen Lösung ein äußerst einfaches Kugelgelenk geschaffen, bei welchem auf die Verwendung einer Gleitschale verzichtet werden kann.

Es ist weiterhin eine äußerst flexible Anordnung der Kugel im Kugelgelenkgehäuse sowie eine variable Ausbildung des Gelenkgehäuses möglich.

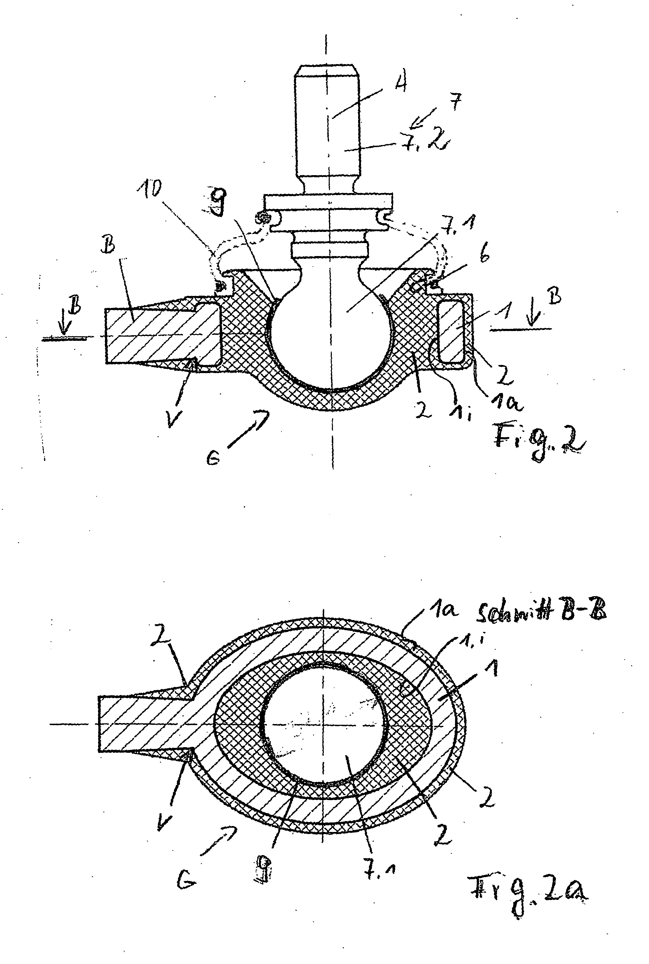

So zeigt Fig. 2 ein Kugelgelenk im Längsschnitt, wobei das Gehäuseteil 1 an seiner Innenkontur 1i und an seiner Außenkontur 1a oval ausgebildet ist und die Kugel 7.1 des Kugelzapfens 7 in einer Gleitschale 9 schwenkbar gelagert ist, mit angedeutetem Dichtungsbalg 10. Der Schnitt B-B gem. Fig. 2 ist in Fig. 2a dargestellt. Der Dichtungsbalg 10 ist in der Nut 6 des Gehäuses G und am Zapfen 7.1 des Kugelzapfens 7 befestigt. Der Raum zwischen Gleitschale 9 und Innenkontur 1i des Gehäuseteils 1, die Außenkontur 7a des Gehäuseteil 1 und die Verbindungsposition V zwischen Gehäuseteil 1 und Befestigungsteil B sind mit Kunststoff 2 versehen.

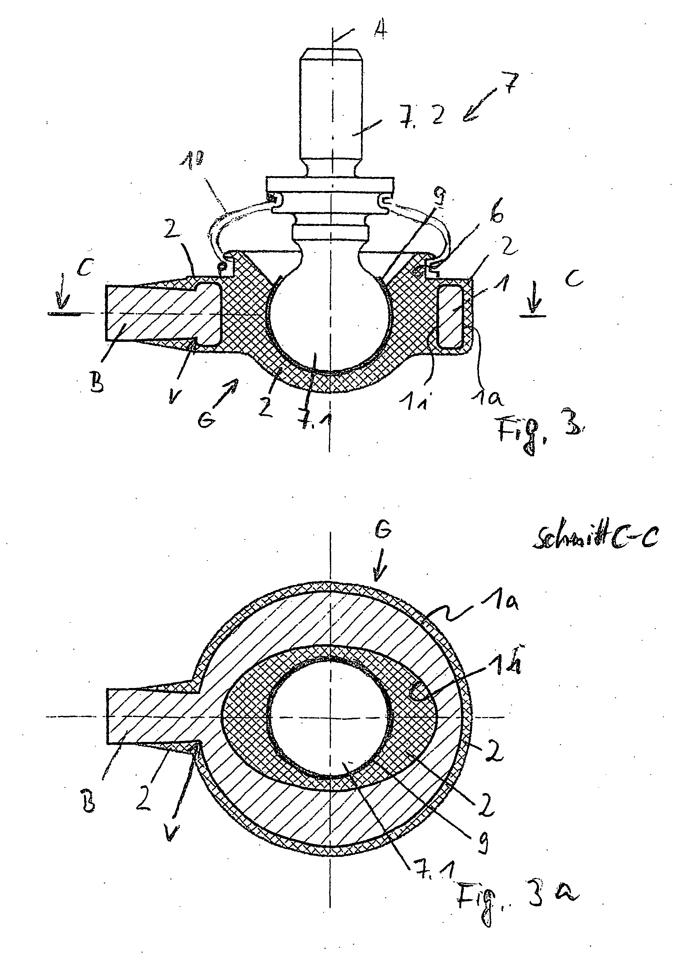

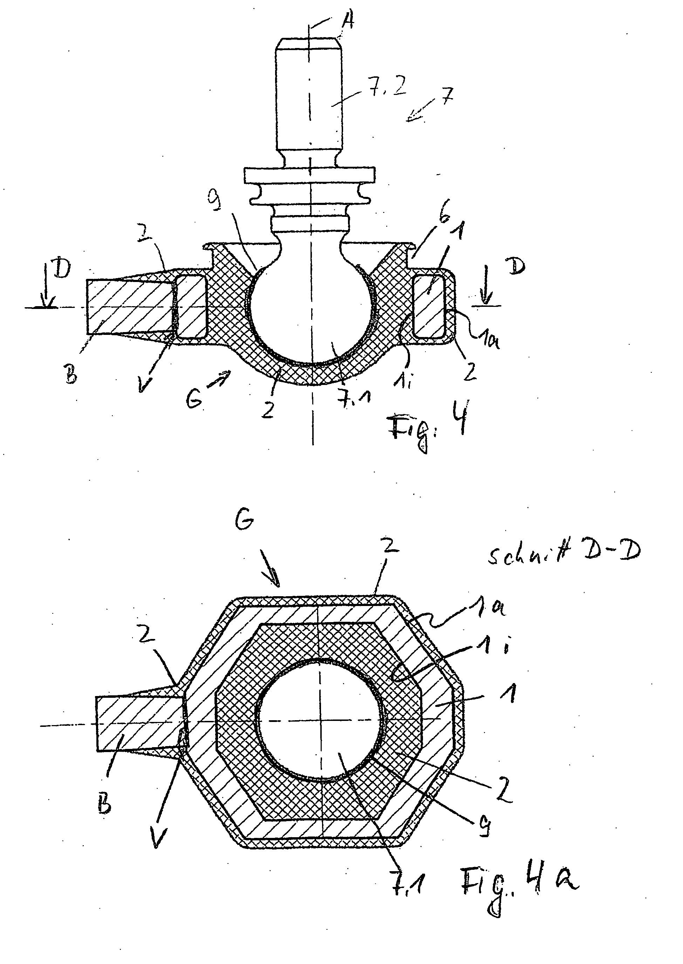

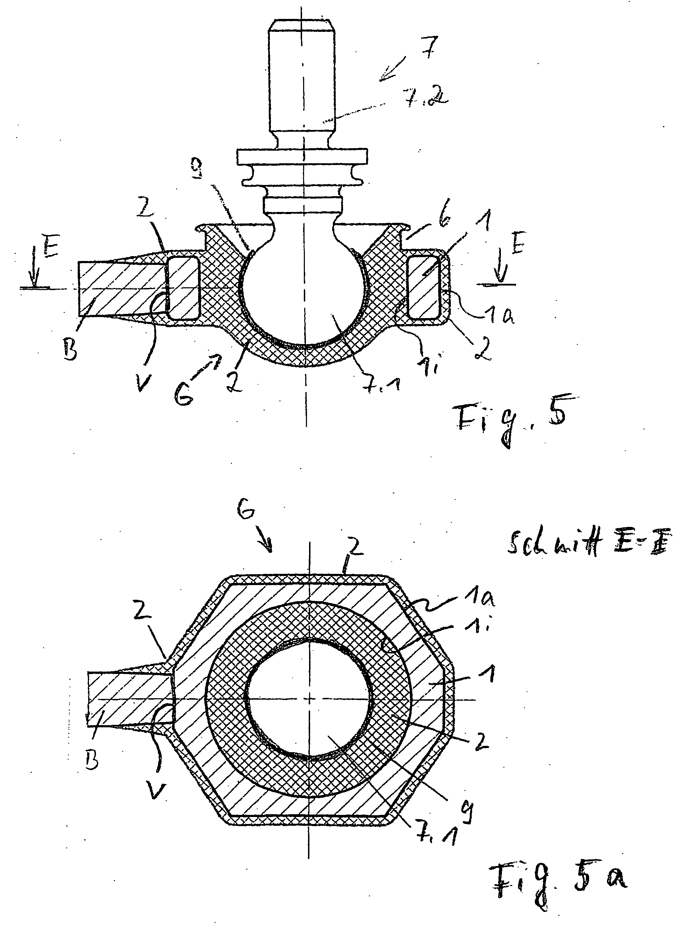

Der Längsschnitt eines Kugelgelenks, wobei das Gehäuseteil 1 an seiner Innenkontur 1 i oval und an seiner Außenkontur 1a kreisförmig ausgebildet ist und die Kugel 7.1 in einer Gleitschale 9 schwenkbar gelagert ist zeigt Fig. 3 und den Schnitt C-C Fig. 3a. Einen Längsschnitt eines Kugelgelenkes wobei das Gehäuseteil 1 an seiner Innenkontur 1i und an seiner Außenkontur 1a achteckig ausgebildet ist und die Kugel 7.1 in einer Gleitschale 9 schwenkbar gelagert ist, zeigt Fig. 4 und der Schnitt D-D gem. Fig. 4 ist in Fig. 4a dargestellt. Eine ähnliche Ausführungsvariante, wobei das Gehäuseteil 1 an seiner Innenkontur 1i kreisförmig und an seiner Außenkontur 1a achteckig ausgebildet ist, wird in Fig. 5 und der Schnitt E-E gem. Fig. 5 in Fig. 5a dargestellt.

Auch in den Varianten gem. Fig. 3, 3a, 4, 4a und 5, 5a ist der Abstand zwischen Gleitschale 9 und Innenkontur 1i des Gehäuseteils 1, mit Kunststoff 2 ausgespritzt und die Außenkontur 7a des Gehäuseteils 1 und die Verbindungsposition V zwischen Gehäuseteil 1 und Befestigungsteil B mit Kunststoff 2 umhüllt.

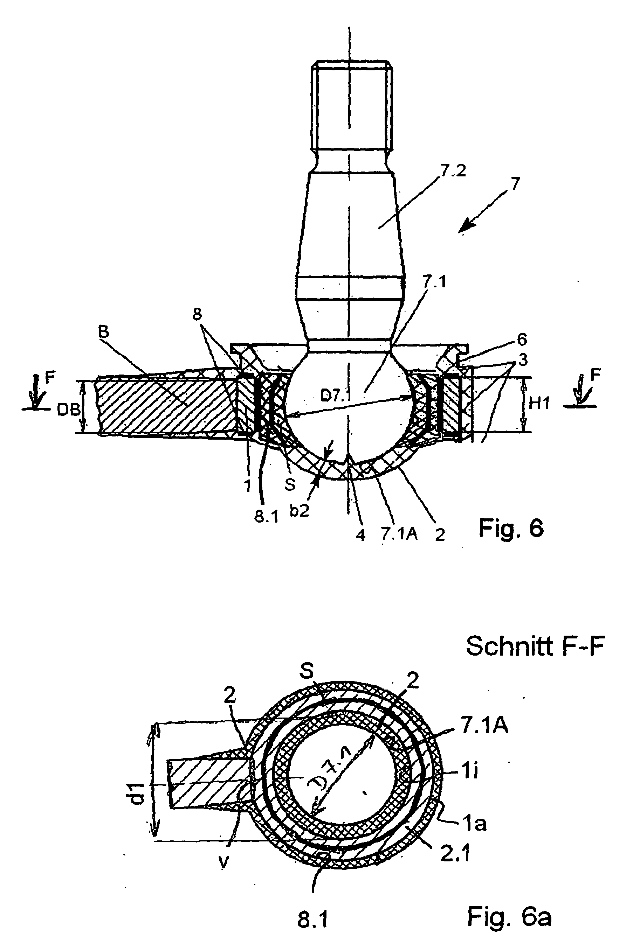

Der Längsschnitt durch ein Kugelgelenk mit einem Sicherungselement S zwischen Kugel 7.1 und Gehäuseteil 1 ist in Fig. 6 und der Schnitt F-F gemäß Figur 6 in Fig. 6a dargestellt. Das Sicherungselement S ist von einem zweiten Kunststoff 2.1 ummantelt, der wiederum von Kunststoff 2 umgeben ist. Der Kunststoff 2 umhüllt weiterhin die Außenkontur 1 a des Gehäuseteils 1 und die Verbindungsposition V zwischen Gehäuseteil 1 Befestigungsteil B. Das Sicherungselement S ist an beiden Enden in Richtung zur Kugel 1 radial nach innen gebogen. Dadurch können höhere axiale Ausreißkräfte aufgenommen werden. Das Sicherungselement ist längs der Achse A des Kugelzapfens 7 geschlitzt, so dass es über die Kugel 7.1 montiert werden kann.

Neben der Anbindung des Befestigungselementes B am Gehäuseteil 1 ist es auch möglich, dieses vom Gehäuseteil 1 beabstandet mit seinem Ende im Kunststoff einzubetten, z.B. in Ausgangsstellung des Gelenks gegenüber der Polfläche der Kugel 7.1.

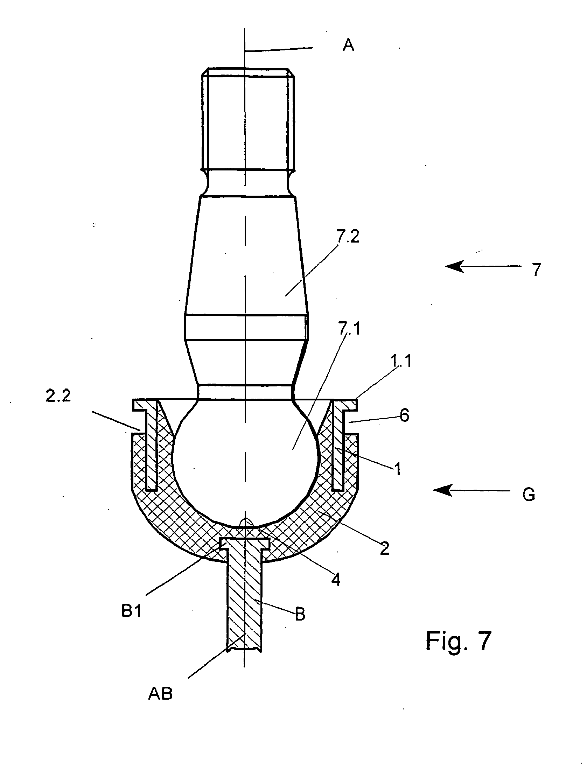

Figur 7 zeigt ein Kugelgelenk mit zylindrischem Gehäuseteil 1, welches aus einem Rohrabschnitt oder einem Blechformteil gefertigt wurde und in Richtung zum Zapfen 7.2 des Kugelzapfens 7 einen radial nach außen gebogenen Bund 1.1 aufweist, in Zusammenhang mit der in Richtung zum Zapfen weisenden Stirnfläche 2.2 des Kunststoffs 2 eine Nut für die Dichtungsbalgaufnahme 6 bildet und gleichzeitig zur Fixierung des Gehäuseteils 1 im hier nicht dargestellten Kunststoffspritzwerkzeug dient. In diesem Ausführungsbeispiel sind keine axial und radial dämpfenden Elemente am Gehäuseteil 1 angeordnet. Das Befestigungsteil B ist erstmalig nicht am Gehäuseteil 1 befestigt, sondern separat im Kunststoff 2 eingebettet. Sein mit einer Durchmessererweiterung B1 versehenes Ende befindet sich hier unterhalb des Polbereiches der Kugel 7.1 im Kunststoff 2. Dadurch ist eine äußerst flexible Anordnung der einzelnen Elemente des Kugelgelenks möglich. Auch hier weist die Kugel 7.1 eine Zentrieröffnung 4 auf, welche mit Kunststoff 2 gefüllt ist, der beim ersten Betrieb von dem anderen Kunststoff 2 abgerissen wird.

Die Achse A des Kugelzapfens 7 und die Achse AB des Befestigungsteils B sind hier fluchtend zueinander ausgerichtet. Es ist jedoch auch möglich, das Befestigungsteil B an anderen Positionen und anderen Winkelstellungen im Kunststoff 2 zu befestigen.

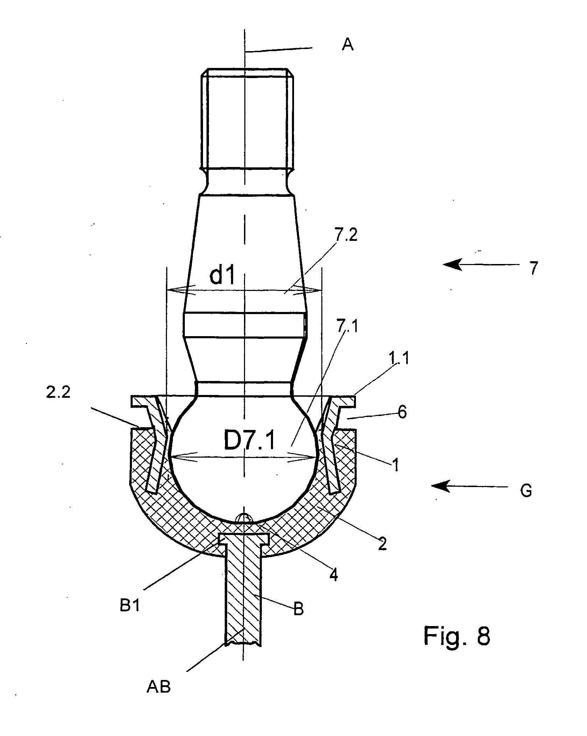

Fig. 8 zeigt wie Fig. 7 ein Kugelgelenk mit einem Gehäuseteil 1 aus einem zylindrischen Rohrabschnitt oder einem Blechformteil, welches einen radial nach außen abgebogenen Bund 1.1 aufweist, der die Dichtungsbalgaufnahme 6 bildet. Das Befestigungsteil B ist ebenfalls nicht am Gehäuseteil 1 befestigt, sondern separat im Kunststoff 2 eingebettet.

Im Unterschied ist in Fig. 8 das Gehäuseteil erfindungsgemäß 1 in Richtung zur Kugel 7.1 radial nach innen und anschließend radial nach außen abgewinkelt, wobei der in Richtung zur Kugel 7.1 liegende Innendurchmesser d1 des verjüngten Bereichs des Gehäuseteils 1 kleiner ist, als der Durchmesser D7.1 der Kugel 7.1. Axial wirkende Kräfte können durch diese Gestaltung des Gehäuseteils 1 besser aufgenommen werden.

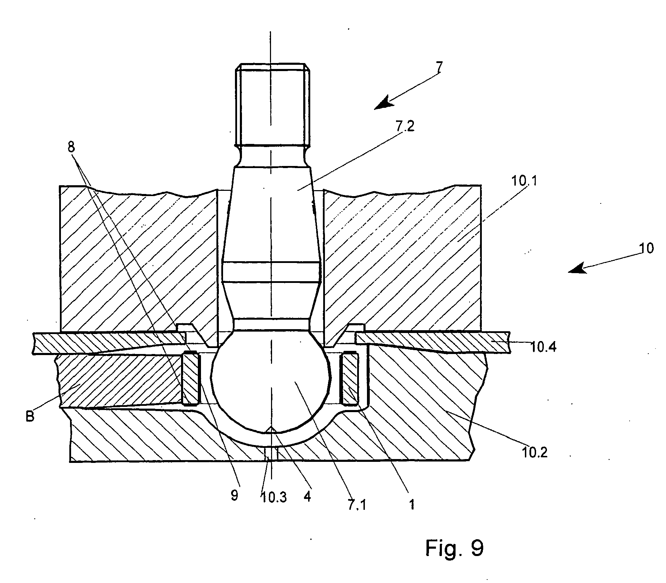

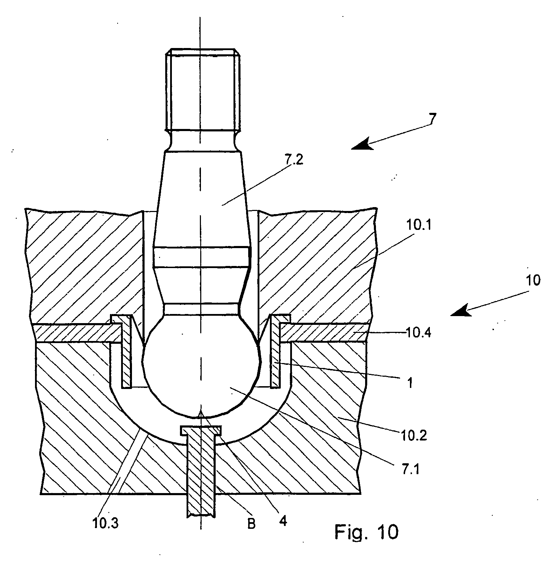

In Fig. 9 und 10 ist dargestellt, wie das Gehäuseteil 1, das Befestigungsteil B und der eine Kugel 7.1 und einen Zapfen 7.2 aufweisende Kugelzapfen 7 in das geschlossene Werkzeug 10 vor dem Injizieren des Kunststoffs zur Herstellung der Kugelgelenke gem. Fig. 1 und 7 eingelegt sind.

Das Werkzeug 10 besteht aus einem Oberwerkzeug 10.1, einem Unterwerkzeug 10.2 mit einer Bohrung 10.3 zur Injektion des Kunststoffes sowie aus einem Querschieber 10.4. Durch die in Richtung zur Kugel 7.1, zum Gehäuseteil 1 und zum Befestigungsteil B weisenden Innenkonturen von Oberwerkzeug 10.1, Unterwerkzeug 10.2 und Schieber 10.3 werden die äußeren Konturen des zu injizierenden Kunststoffs bestimmt. Der Querschieber 10.4 legt dabei die Höhe der Nut 6 für die spätere Befestigung des nicht dargestellten Dichtungsbalges fest. Nach dem Injizieren des Kunststoffs in den durch das Werkzeug 10 nach außen begrenzten Raum, in welchem das Gehäuseteil 1, die Kugel 7.1 und das Befestigungselement entsprechend positioniert sind, und dem Verfestigen des Kunststoffs 2 wird das Werkzeug 10 geöffnet und das fertige Kugelgelenk (s. Fig. 1 und 7) entnommen.

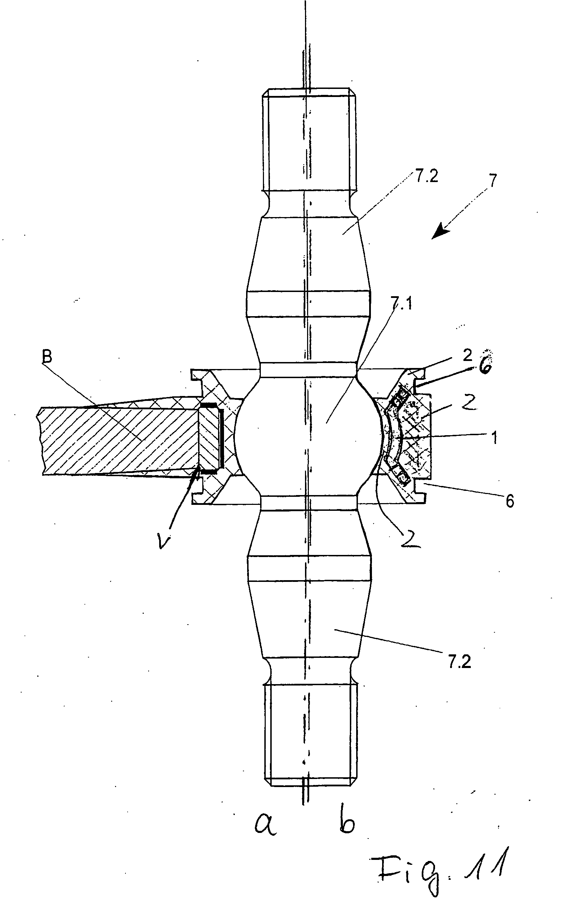

Gemäß Figur 11 ist es auch möglich, in dem Gehäuseteil 1 einen Kugelzapfen 7 anzuordnen, welcher eine Kugel 7.1 mit zwei spiegelbildlich angeordneten Zapfen 7.2 aufweist. Im Kunststoff 2 sind dabei zwei Dichtungsbalgaufnahmen 6 oben und unten radial umlaufend angeordnet. Am zylindrischen metallischen Gehäuseteil 1 ist das Befestigungsteil B befestigt (linke Darstellung a). Die rechte Seite b der Fig. 11 zeigt eine Variante mit sich in Richtung zur Kugel 7.1 verjüngendem Gehäuseteil 1. Gemäß einer nicht dargestellten Ausführungsvariante können auch zwei Zapfen mit unterschiedlichen Zapfenanschlüssen verwendet werden.

Es ist weiterhin möglich, gem. Fig. 12 ein Hülsengelenk herzustellen, welches ein kunststoffummanteltes Gehäuseteil 1 aufweist.

In der Kugel 7.1 sitzen spiegelbildlich zueinander zwei Hülsen H1, H2. Diese weisen an ihren voneinander wegweisenden Enden Dichtungsbalgaufnahmen 6H1, 6H2 auf. Um die Kugel 7.1 ist das Gehäuseteil 1 angeordnet, welches in der linken Darstellung a aus zwei Gehäuseteilen 1b, 1 c, besteht, die einen radial nach außen weisenden Rand 1.1 aufweisen und spiegelbildlich zueinander in einem Abstand a angeordnet sind. Die radial nach außen weisenden Ränder 1.1 bilden dabei die äußere Begrenzung der Dichtungsbalgaufnahme der Dichtungsbalge 10. In der rechten Darstellung b wurde ein Gehäuseteil 1 verwendet, welches erfindungsgemäß von der Dichtungsbalgaufnahme 6 in Richtung zur Kugel 7.1 radial nach innen abgewinkelt, dann entsprechend der Krümmung der Kugel 7.1 geformt und anschließend wieder radial nach außen abgewinkelt ist, wobei der entsprechend der Krümmung der Kugel 7.1 geformte Bereich des Gehäuseteils 1 an seinen beiden Enden, die beidseitig über den Äquatorbereich der Kugel 7 ragen einen Innendurchmesser d1 aufweist, der gleich oder kleiner ist als der Durchmesser D7.1 der Kugel 7.1. In diesem Fall muss das Gehäuseteil 1 längs der Achse des Kugelgelenks geschlitzt sein, da es sonst nicht über der Kugel 7.1 montierbar ist.

Das Gehäuseteil 1 wurde bis zur Kugel 7.1 mit Kunststoff 2 umspritzt. Zwischen den Dichtungsbalgen 10 weist der Kunststoff 2 eine zylindrische Wandung auf, die z.B. von einem nicht dargestellten KfZ-Teil mit einer entsprechenden Bohrung aufgenommen werden kann.

## Patentansprüche

1. Kugelgelenk mit einer Kugel (7.1), die mit ihrer Kugelfläche (7.1A) in einem Kugelgelenkgehäuse (G) beweglich gelagert ist, und mit einer Dichtungsbalgaufnahme,
wobei
- das Kugelgelenkgehäuse (G) ein von der Kugel (7.1) beabstandetes Gehäuseteil (1) aufweist,
- und sich mindestens ein Kugelzapfen oder mindestens eine Hülse an die Kugel (7.1) anschließt,
- wobei der Zwischenraum zwischen der Kugel (7.1) und dem Gehäuseteil (1) mit Kunststoff (2) gefüllt und das Gehäuseteil zumindest teilweise (1) von Kunststoff (2) umschlossen ist,
und wobei die Dichtungsbalgaufnahme (6) in Form einer umfangsseitig eingebrachten Nut ausgebildet ist und sich entweder im Kunststoff (2) befindet oder zwischen einem radial nach außen abgewinkelten Bereich des Gehäuseteils (1) und einer Stirnfläche des Kunststoffs (2) angeordnet ist und
das Gehäuseteil (1) aus Richtung der Dichtungsbalgaufnahme (6)
- in Richtung zur Kugel (7.1) radial nach innen und anschließend radial nach außen abgewinkelt ist, wobei der in Richtung zur Kugel (7.1) liegende Innendurchmesser (d1) des Gehäuseteils (1) kleiner ist, als der Durchmesser (D7.1) der Kugel (7.1)
oder
- in Richtung zur Kugel (7.1) radial nach innen abgewinkelt ist, dann entsprechend der Krümmung der Kugel (7.1) bis über deren Äquatorbereich hinaus geformt und anschließend wieder radial nach außen abgewinkelt ist.

2. Kugelgelenk nach Anspruch 1, **dadurch gekennzeichnet, dass** der entsprechend der Krümmung der Kugel (7.1) geformte Bereich des Gehäuseteils (1) an seinen beiden Enden, die beidseitig über den Äquatorbereich der Kugel (7.1) ragen, einen Innendurchmesser (d1) aufweist, der gleich oder kleiner ist als der Durchmesser (D7.1) der Kugel (7.1).

3. Kugelgelenk nach Anspruch 1 oder 2, **dadurch gekennzeichnet, dass** das Gehäuseteil (1) längs der Achse (A) des Kugelgelenks geschlitzt ist.

4. Kugelgelenk nach einem der Ansprüche 1 bis 3, **dadurch gekennzeichnet, dass** ein Befestigungsteil (B) vom Gehäuseteil (1) getrennt und zumindest teilweise im Kunststoff (2) eingebettet ist.

5. Kugelgelenk nach einem der Ansprüche 1 bis 4, **dadurch gekennzeichnet, dass** zwischen Gehäuse (1) und Kugel (7.1) ein im Kunststoff eingebettetes Sicherungselement (S) angeordnet ist.

6. Kugelgelenk nach Anspruch 5, **dadurch gekennzeichnet, dass** die Form des Sicherungselementes (S) der Krümmung der Kugel (7.1) angepasst ist.

7. Kugelgelenk nach einem der Ansprüche 5 oder 6, **dadurch gekennzeichnet, dass** der Kunststoff, in welchen das Sicherungselement (S) eingebettet ist, dem Kunststoff (2) entspricht, welcher die Kugel (7.1) und das Gehäuse (1) ummantelt.

8. Kugelgelenk nach einem der Ansprüche 5 oder 6, **dadurch gekennzeichnet, dass** der Kunststoff, in welchen das Sicherungselement (S) eingebettet ist, ein zweiter Kunststoff (2.1) ist.

9. Kugelgelenk nach einem der Ansprüche 1 bis 8, **dadurch gekennzeichnet, dass** der Kunststoff (2) aus Polyoxymethylen (POM) besteht.

10. Kugelgelenk nach einem der Ansprüche 1 bis 9, **dadurch gekennzeichnet, dass** die Kugel (7.1) polseitig eine Zentrieröffnung (4) aufweist.

11. Kugelgelenk nach Anspruch10, **dadurch gekennzeichnet, dass** die Zentrieröffnung (4) mit Kunststoff (2) ausfüllbar ist.

12. Kugelgelenk nach Anspruch 11, **dadurch gekennzeichnet, dass** der in der Zentrieröffnung (4) befindliche Kunststoff (2) von dem die Kugel (7.1) umschließenden Kunststoff (2) durch eine Schwenkbewegung des Kugelzapfens (7) trennbar ist.

13. Kugelgelenk nach einem der Ansprüche 1 bis 12, **dadurch gekennzeichnet, dass** das Gehäuseteil (1) an seiner Innenkontur und/oder an einer oder beiden Stirnflächen mit elastischen Dämpfungselementen (8,9) versehen ist.

14. Kugelgelenk nach einem der Ansprüche 1 bis 13, **dadurch gekennzeichnet, dass** die Kugel (7.1) mit einem Gleitmittel beschichtet ist.

15. Kugelgelenk nach Anspruch 14, **dadurch gekennzeichnet, dass** das Gleitmittel eine Beschichtung aus einem wärme- und kältebeständigen, teilkristallinen und gute Gleiteigenschaften aufweisenden Kunststoff ist.

16. Kugelgelenk nach Anspruch 14 oder 15, **dadurch gekennzeichnet, dass** das Gleitmittel Polytetrafluorethylen (PTFE) ist.

17. Kugelgelenk nach einem der Ansprüche 1 bis 16, **dadurch gekennzeichnet, dass** die Kugel (7.1) schwenkbar in einer Gleitschale (9) sitzt.

18. Kugelgelenk nach einem der Ansprüche 1 bis 17, **dadurch gekennzeichnet, dass** das Gehäuseteil (1) oval ausgebildet ist.

19. Kugelgelenk nach einem der Ansprüche 1 bis 18, **dadurch gekennzeichnet, dass** das Gehäuseteil (1) im Querschnitt rechtwinklig zu seiner Längsachse (A) als Vieleck ausgebildet ist.

20. Kugelgelenk nach einem der Ansprüche 1 bis 19, **dadurch gekennzeichnet, dass** das Gehäuseteil (1) im Querschnitt rechtwinklig zu seiner Längsachse (A) einen zylindrischen Innendurchmesser (di) und eine ovalen oder als Vieleck ausgebildete Außenkontur (1a) aufweist.

## Claims

1. A ball joint having a ball (7.1), which is mounted using its ball surface (7.1A) so it is movable in a ball joint housing (G), and having a seal bellows receptacle,
- the ball joint housing (G) having a housing part (1) which is spaced apart from the ball (7.1),
- and at least one ball journal or at least one sleeve adjoins the ball (7.1),
- the intermediate space between the ball (7.1) and the housing part (1) being filled using plastic (2) and the housing part (1) being at least partially enclosed by plastic (2),
and the seal bellows receptacle (6) being implemented in the form of a peripherally introduced groove and either being located in the plastic (2) or being situated between an area of the housing part (1) which is angled radially outward and a front face of the plastic (2) and
the housing part (1), from the direction of the seal bellows receptacle (6),
- being angled radially inward and subsequently radially outward in the direction toward the ball (7.1), the internal diameter (d1) of the housing part (1) in the direction toward the ball (7.1) being smaller than the diameter (D7.1) of the ball (7.1)
or
- being angled radially inward in the direction toward the ball (7.1), then being shaped according to the curvature of the ball (7.1) up to beyond its equator region and subsequently being angled radially outward again.

2. The ball joint according to Claim 1, **characterized in that** the area of the housing part (1) shaped corresponding to the curvature of the ball (7.1) has an internal diameter (d1) which is less than or equal to the diameter (D7.1) of the ball (7.1) at its two ends, which protrude on both sides beyond the equator area of the ball (7.1).

3. The ball joint according to Claim 1 or 2, **characterized in that** the housing part (1) is slotted along the axis (A) of the ball joint.

4. The ball joint according to one of Claims 1 to 3, **characterized in that** a fastening part (B) is separated from the housing part (1) and at least partially embedded in the plastic (2).

5. The ball joint according to one of Claims 1 to 4, **characterized in that** a securing element (S) embedded in plastic is situated between housing (1) and ball (7.1).

6. The ball joint according to Claim 5, **characterized in that** the shape of the securing element (S) is adapted to the curvature of the ball (7.1).

7. The ball joint according to one of Claims 5 or 6, **characterized in that** the plastic in which the securing element (S) is embedded corresponds to the plastic (2) which envelops the ball (7.1) and the housing (1).

8. The ball joint according to one of Claims 5 or 6, **characterized in that** the plastic in which the securing element (S) is embedded is a second plastic (2.1).

9. The ball joint according to one of Claims 1 to 8, **characterized in that** the plastic (2) comprises polyoxymethylene (POM).

10. The ball joint according to one of Claims 1 to 9, **characterized in that** the ball (7.1) has a centering opening (4) on the pole side.

11. The ball joint according to Claim 10, **characterized in that** the centering opening (4) is fillable using plastic (2).

12. The ball joint according to Claim 11, **characterized in that** the plastic (2) located in the centering opening (4) is separable from the plastic (2) enclosing the ball (7.1) by a pivot movement of the ball journal (7).

13. The ball joint according to one of Claims 1 to 12, **characterized in that** the housing part (1) is provided with elastic damping elements (8, 9) on its inner contour and/or on one or both front faces.

14. The ball joint according to one of Claims 1 to 13, **characterized in that** the ball (7.1) is coated using a lubricant.

15. The ball joint according to Claim 14, **characterized in that** the lubricant is a coating made of a heat-resistant, cold-resistant, partially crystalline plastic having good sliding properties.

16. The ball joint according to Claim 14 or 15, **characterized in that** the lubricant is polytetrafluoroethylene (PTFE).

17. The ball joint according to one of Claims 1 to 16, **characterized in that** the ball (7.1) is seated so it is pivotable in a sliding shell (9).

18. The ball joint according to one of Claims 1 to 17, **characterized in that** the housing part (1) is implemented as oval.

19. The ball joint according to one of Claims 1 to 18, **characterized in that** the housing part (1) is implemented as polygonal in cross-section perpendicularly to its longitudinal axis (A).

20. The ball joint according to one of Claims 1 to 19, **characterized in that** the housing part (1) has a cylindrical internal diameter (di) and an external contour (1a) implemented as oval or polygonal in cross-section perpendicularly to its longitudinal axis (A).

## Revendications

1. Articulation sphérique avec une sphère (7.1) qui est supportée de façon mobile avec sa surface sphérique (7.1A) dans un logement d'articulation sphérique (G) et avec un réceptacle de soufflet d'étanchéité,
dans laquelle
- le logement d'articulation sphérique (G) présente une partie de logement (1) distant de la sphère (7.1),
- et au moins un pivot à rotule ou au moins une douille se raccorde à la sphère (7.1),
- dans laquelle l'espace compris entre la sphère (7.1) et la partie de logement (1) est remplie de matière plastique (2) et la partie de logement est au moins partiellement (1) enrobée de matière plastique (2),
et dans laquelle le réceptacle de soufflet d'étanchéité (6) est réalisé sous la forme d'une gorge formée sur la circonférence et soit se trouve dans la matière plastique (2), soit est disposée entre une partie de la partie de logement (1) inclinée vers l'extérieur dans le sens radial et une face d'extrémité de la matière plastique (2), et
la partie de logement partie de logement (1), à partir de la direction du réceptacle de soufflet d'étanchéité (6),
- est inclinée en direction de la sphère (7.1) vers l'intérieur dans le sens radial puis vers l'extérieur dans le sens radial, le diamètre (d1) de la partie de logement (1) situé en direction de la sphère (7.1) étant plus petit que le diamètre (D7.1) de la sphère (7.1),
ou
- est inclinée en direction de la sphère (7.1) vers l'intérieur dans le sens radial puis conformée selon la courbure de la sphère (7.1) jusque au-delà de son équateur puis à nouveau inclinée vers l'extérieur dans le sens radial.

2. Articulation sphérique selon la revendication 1, **caractérisée en ce que** la zone de la partie de logement (1) conformée selon la courbure de la sphère (7.1) présente à ses deux extrémités qui dépassent de part et d'autre au-delà de l'équateur de la sphère (7.1) un diamètre intérieur (d1) qui est égal ou inférieur au diamètre (D7.1) de la sphère (7.1).

3. Articulation sphérique selon la revendication 1 ou 2, **caractérisée en ce que** la partie de logement (1) est fendue le long de l'axe (A) de l'articulation sphérique.

4. Articulation sphérique selon l'une des revendications 1 à 3, **caractérisée en ce qu'**une partie de fixation (B) est séparée de la partie de logement (1) et au moins partiellement incluse dans la matière plastique (2).

5. Articulation sphérique selon l'une des revendications 1 à 4, **caractérisée en ce qu'**il est prévu entre le logement (1) et la sphère (7.1) un élément de fixation (S) inclus dans la matière plastique.

6. Articulation sphérique selon la revendication 5, **caractérisée en ce que** la forme de l'élément de fixation (S) est adaptée à la courbure de la sphère (7.1).

7. Articulation sphérique selon l'une des revendications 5 ou 6, **caractérisée en ce que** la matière plastique dans laquelle l'élément de fixation (S) correspond à la matière plastique (2) qui enveloppe la sphère (7.1) et le logement (1).

8. Articulation sphérique selon l'une des revendications 5 ou 6, **caractérisée en ce que** la matière plastique dans laquelle l'élément de fixation (S) est inclus est une deuxième matière plastique (2.1).

9. Articulation sphérique selon l'une des revendications 1 à 8, **caractérisée en ce que** la matière plastique (2) se compose de polyoxyméthylène (POM).

10. Articulation sphérique selon l'une des revendications 1 à 9, **caractérisée en ce que** la sphère (7.1) présente une ouverture de centrage (4) du côté du pôle.

11. Articulation sphérique selon la revendication 10, **caractérisée en ce que** l'ouverture de centrage (4) peut être remplie avec de la matière plastique (2).

12. Articulation sphérique selon la revendication 11, **caractérisée en ce que** la matière plastique (2) se trouvant dans l'ouverture de centrage (4) peut être séparée de la matière plastique (2) enveloppant la sphère (7.1) par un mouvement basculant du pivot à rotule (7).

13. Articulation sphérique selon l'une des revendications 1 à 12, **caractérisée en ce que** la partie de logement (1) est munie sur son contour intérieur et/ou sur une ou les deux faces d'extrémité d'éléments d'amortissement élastiques (8, 9).

14. Articulation sphérique selon l'une des revendications 1 à 13, **caractérisée en ce que** la sphère (7.1) est recouverte d'un agent antifriction.

15. Articulation sphérique selon la revendication 14, **caractérisée en ce que** l'agent antifriction est un revêtement fait d'une matière plastique résistante au chaud et au froid, partiellement cristalline et présentant de bonnes propriété antifriction.

16. Articulation sphérique selon la revendication 14 ou 15, **caractérisée en ce que** l'agent antifriction est du polytétrafluoroéthylène (PTFE).

17. Articulation sphérique selon l'une des revendications 1 à 16, **caractérisée en ce que** la sphère (7.1) repose de façon pivotante dans une cupule de glissement (9).

18. Articulation sphérique selon l'une des revendications 1 à 17, **caractérisée en ce que** la partie de logement (1) est de forme ovale.

19. Articulation sphérique selon l'une des revendications 1 à 18, **caractérisée en ce que** la partie de logement (1) est conformée comme un polygone en section perpendiculairement à son axe longitudinal (A).

20. Articulation sphérique selon l'une des revendications 1 à 19, **caractérisée en ce que** la partie de logement (1) présente en section perpendiculairement à son axe longitudinal (A) un diamètre intérieur (di) cylindrique et un contour extérieur (1a) ovale ou polygonal.
